# EUROPEAN PATENT APPLICATION

(11) **EP 4 811 119 A2**
(43) Date of publication of application: **23.09.2026**
(21) Application number: 26197389.5
(22) Date of filing: 17.09.2021
(51) Int. Cl.: G06F 8/61

(54) **INTEGRATED INSTALLATION OF RESOURCE SHARING SOFTWARE ON COMPUTER AND CONNECTED NETWORK INTERFACE CARD**

(30) Priority: 28.09.2020 US 202063084536 P; 29.12.2020 IN 202041056829; 16.09.2021 US 202117476934
(62) Document number(s) of the earlier application(s) in accordance with Art. 76 EPC: 21791147.8 / 4 147 128
(71) Applicant: VMware LLC, Palo Alto, CA 94304 (US)
(72) Inventor: Voltz, Renaud B., Palo Alto, 94304 (US); Haryadi, Aravinda, 560103 Bengaluru (IN); Mu, Yuedong, Palo Alto, 94304 (US); He, Lingyuan, Palo Alto, 94304 (US)
(74) Representative: Dilg, Haeusler, Schindelmann Patentanwaltsgesellschaft mbH

(57) **Abstract**

Some embodiments provide a method, at a host computer, of provisioning a first program for enabling resource sharing on a smart network interface card (NIC ) of the host computer. The method receives the first program at the host computer along with a second program for sharing resources of the host computer. The method installs the second program on the host computer. The method provides the first program to the smart NIC for the smart NIC to install on the smart NIC.

## Description

### BACKGROUND

More operations normally associated with a server are being pushed to programmable network interface controllers (NICs). Some of the operations pushed to programmable NICs include flow processing for virtualized compute nodes. As these programmable NICs become more prevalent and perform more flow processing on behalf of virtualized networks, optimizations to the flow processing will enhance the functionality of programmable NICs. Accordingly, it is desirable to optimize the flow processing offloaded to a programmable NIC.

### BRIEF SUMMARY

Some embodiments provide a method for provisioning a smart network interface card (NIC) with a smart NIC operating system for enabling resource sharing on the smart NIC connected to a host computer. The method, in some embodiments, is performed by the host computer and begins when the host computer receives a host-computer hypervisor program for enabling resource sharing by the host computer that also includes the smart NIC operating system. The host computer then installs the host-computer hypervisor program and provides the smart NIC operating system to the smart NIC for the smart NIC to install a smart NIC operating system on the smart NIC. In some embodiments, the host-computer hypervisor program and the smart NIC operating system are part of a single downloaded package.

The smart NIC, in some embodiments, is a NIC that includes (i) an application-specific integrated circuit (ASIC), (ii) a general purpose central processing unit (CPU), and (iii) memory. The ASIC, in some embodiments, is an I/O ASIC that handles the processing of packets forwarded to and from the computer and is at least partly controlled by the CPU. The CPU executes a NIC operating system in some embodiments that controls the ASIC and can run other programs, such as API translation logic to enable the compute manager to communicate with a bare metal computer. The smart NIC also includes a configurable peripheral control interconnect express (PCIe) interface in order to connect to the other physical components of the bare metal computer system (e.g., the x86 CPU, memory, etc.). Via this configurable PCIe interface, the smart NIC can present itself to the bare metal computer system as a multitude of devices, including a packet processing NIC, a hard disk (using non-volatile memory express (NVMe) over PCIe), or other devices.

Although not necessary for managing a bare metal computer, the NIC operating system of some embodiments is capable of executing a virtualization program (similar to a hypervisor) that enables sharing resources (e.g., memory, CPU resources) of the smart NIC among multiple machines (e.g., VMs) if those VMs execute on the computer. The virtualization program can provide compute virtualization services and/or network virtualization services similar to a managed hypervisor. These network virtualization services, in some embodiments, include segregating data messages into different private (e.g., overlay) networks that are defined over the physical network (shared between the private networks), forwarding the data messages for these private networks (e.g., performing switching and/or routing operations), and/or performing middlebox services for the private networks.

The host-computer hypervisor program and the smart NIC operating system, in some embodiments, are programs that do not have previous versions installed on the computer or the smart NIC. In other embodiments, the host-computer hypervisor program and the smart NIC operating system received by the host computer are update programs for previously installed versions of the host-computer hypervisor program and the smart NIC operating system. After a host-computer hypervisor program and the smart NIC operating system are received, the host computer, in some embodiments, receives an additional program for updating the smart NIC operating system and provides the received program to the smart NIC for the smart NIC to update the smart NIC operating system.

In some embodiments, after receiving the host-computer hypervisor program and the smart NIC operating system, the host computer detects (or determines) that the host computer is connected to the smart NIC. In some embodiments, the connection is made over a standard PCIe connection and the smart NIC is detected as a peripheral device that supports the installation of the smart NIC operating system. The host computer provides, based on the detection, the smart NIC operating system to the smart NIC for the smart NIC to install. In some embodiments, the smart NIC operating system is sent to the smart NIC along with an instruction to the smart NIC to install the smart NIC operating system.

In some embodiments, the host computer includes a local controller that receives the host-computer hypervisor program and the smart NIC operating system. The local controller, in some embodiments, provides the host-computer hypervisor program and the smart NIC operating system to a compute agent that installs the host-computer hypervisor program on the host computer to enable the host computer to share resources among a set of compute nodes (e.g., virtual machines, containers, Pods, etc.). The host-computer hypervisor program and the smart NIC operating system are particular examples of virtualization software that is used, in some embodiments, to enabling resource sharing for the host computer and smart NIC, respectively.

In some embodiments, the smart NIC includes a set of ASICs, a general purpose CPU, and a memory. The set of ASICs, in some embodiments, includes an ASIC for processing packets forwarded to and from the host computer as well as other ASICs for accelerating operations performed by the smart NIC on behalf of the host computer (e.g., encryption, decryption, storage, security, etc.). The smart NIC operating system, in some embodiments, includes virtualization programs for network virtualization, compute virtualization, and storage virtualization. The virtualization programs, in some embodiments, enable sharing the resources of the smart NIC among multiple tenants of a multi-tenant datacenter.

The network virtualization program provides network virtualization services on the smart NIC. The network virtualization services, in some embodiments, include forwarding operations (e.g., network switching operations and network routing operations). The forwarding operations are performed, in some embodiments, on behalf of multiple logically separate networks implemented over a shared network of a datacenter. Forwarding packets for different logical networks, in some embodiments, includes segregating packets for each logically separate network into the different logically separate networks. Forwarding operations for the different logical networks, in some embodiments, are implemented as different processing pipelines that perform different sets of operations. The different sets of operations include, in some embodiments, different logical packet forwarding operations (e.g., logical switching, logical routing, logical bridging, etc.) and different middlebox services (e.g., a firewall service, a load balancing service, etc.).

The compute virtualization program, in some embodiments, provides virtualized compute resources (virtual machines, containers, Pods, etc.) that execute over the compute virtualization program. The storage virtualization program, in some embodiments, provides storage virtualization services on the smart NIC. The virtualized storage, in some embodiments, include one or multiple of virtual storage area networks (vSANs), virtual volumes (vVOLs), and other virtualized storage solutions. The virtualized storage appears to the connected host computer as a local storage, in some embodiments, even when the physical resources that are the backend of the virtualized storage are provided by a distributed set of storages of multiple physical host computers.

The preceding Summary is intended to serve as a brief introduction to some embodiments of the invention. It is not meant to be an introduction or overview of all inventive subject matter disclosed in this document. The Detailed Description that follows and the Drawings that are referred to in the Detailed Description will further describe the embodiments described in the Summary as well as other embodiments. Accordingly, to understand all the embodiments described by this document, a full review of the Summary, Detailed Description, and the Drawings is needed. Moreover, the claimed subject matters are not to be limited by the illustrative details in the Summary, Detailed Description, and the Drawings, but rather are to be defined by the appended claims, because the claimed subject matters can be embodied in other specific forms without departing from the spirit of the subject matters.

### BRIEF DESCRIPTION OF THE DRAWINGS

The novel features of the invention are set forth in the appended claims. However, for purpose of explanation, several embodiments of the invention are set forth in the following figures.
**Figure 1** illustrates a system including a host computer and a connected smart NIC being configured with a host computer virtualization program and a smart NIC operating system.
**Figure 2** conceptually illustrates a process for installing programs enabling resource sharing on a host computer and smart NIC.
**Figure 3** conceptually illustrates a process that, in some embodiments, represents sub-operations of an operation described in relation to **Figure 2**.
**Figure 4** illustrates a simplified view of a host computer including a baseboard management controller (BMC) and connecting to the smart NIC through a PCIe bus.
**Figure 5** conceptually illustrates a process that is performed by the smart NIC to install the smart NIC operating system as part of the process described in **Figure 3**.
**Figure 6** illustrates a smart NIC after the installation is complete with its storage partitioned into a first partition storing the smart NIC operating system and a second partition.
**Figure 7** illustrates a system that includes the host computer, the smart NIC, a set of SDN controller computers, and a set of SDN manager computers.
**Figure 8** illustrates a host computer executing a host computer hypervisor and a set of compute nodes (CN₁-CN_{M}) for a first tenant ("T1") and a set of compute nodes (CNₐ-CNₓ) for a second tenant ("T2").
**Figure 9** illustrates a smart NIC providing compute virtualization and network virtualization to provide virtualized resources (e.g., compute nodes, physical functions, and a set of virtual functions) to be used by compute nodes executing on a host computer.
**Figure 10** illustrates an interaction between an I/O ASIC, a virtual switch, and a fast path entry generator, in some embodiments.
**Figure 11** illustrates a system including a smart NIC and a set of host computers connected to the smart NIC through two different PCIe buses.
**Figure 12** conceptually illustrates an electronic system with which some embodiments of the invention are implemented.

### DETAILED DESCRIPTION

In the following detailed description of the invention, numerous details, examples, and embodiments of the invention are set forth and described. However, it will be clear and apparent to one skilled in the art that the invention is not limited to the embodiments set forth and that the invention may be practiced without some of the specific details and examples discussed.

Some embodiments of the invention provide a method for provisioning a smart NIC with a smart NIC operating system for enabling resource sharing on the smart NIC connected to a host computer. One of ordinary skill in the art will appreciate that a hypervisor program is used as an example of virtualization software (e.g., software enabling resource sharing for a device executing the software). The method, in some embodiments, is performed by the host computer and begins when the host computer receives (1) a host-computer hypervisor program for enabling resource sharing on the host computer and (2) the smart NIC operating system. The host computer then installs the host-computer hypervisor program and provides the smart NIC operating system to the smart NIC for the smart NIC to install on the smart NIC. In some embodiments, the host-computer hypervisor program and the smart NIC operating system are part of a single downloaded package.

As used herein, data messages refer to a collection of bits in a particular format sent across a network. One of ordinary skill in the art will recognize that the term data message is used in this document to refer to various formatted collections of bits that are sent across a network. The formatting of these bits can be specified by standardized protocols or non-standardized protocols. Examples of data messages following standardized protocols include Ethernet frames, IP packets, TCP segments, UDP datagrams, etc. Also, as used in this document, references to L2, L3, L4, and L7 layers (or layer 2, layer 3, layer 4, and layer 7) are references respectively to the second data link layer, the third network layer, the fourth transport layer, and the seventh application layer of the OSI (Open System Interconnection) layer model.

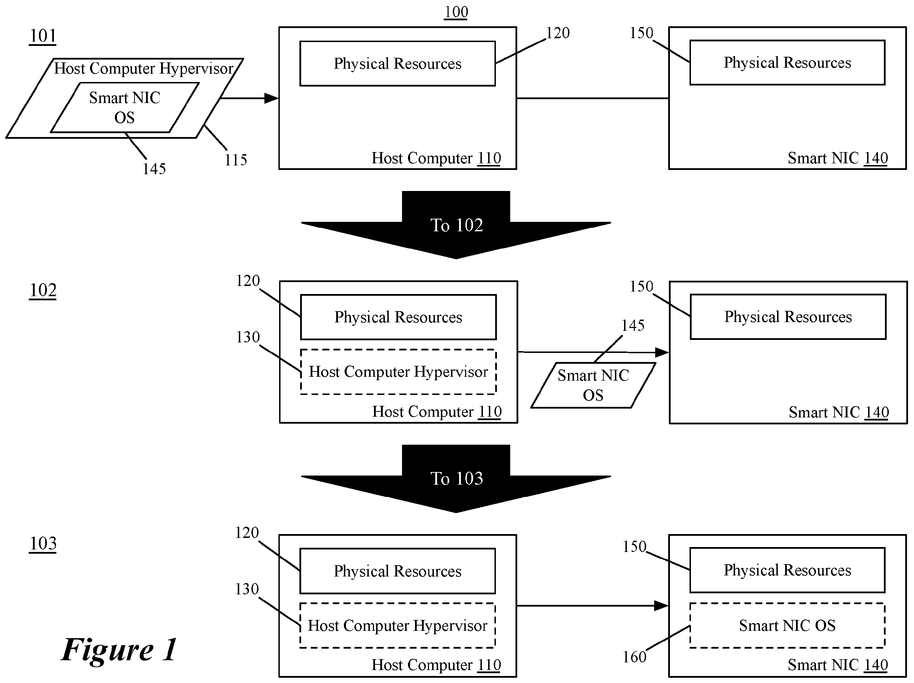

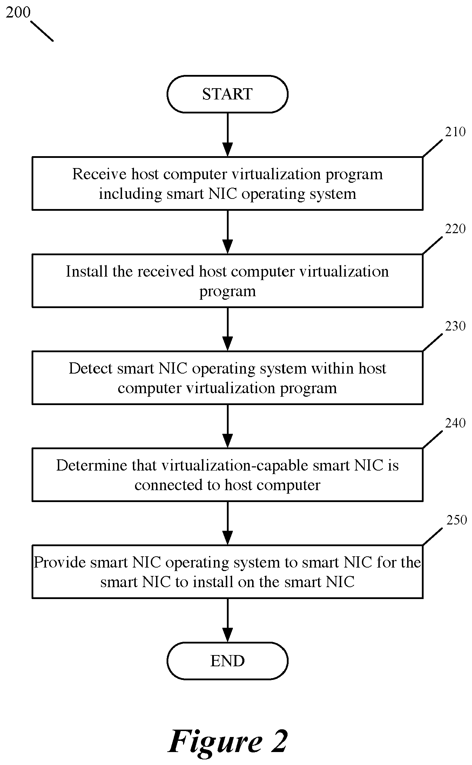

**Figure 1** illustrates a system 100 including a host computer 110 and a connected smart NIC 140 being configured with host computer virtualization software 130 and a smart NIC operating system 160. Host computer 110 includes a set of physical resources 120 and smart NIC 140 includes a separate set of physical resources 150. The set of physical resources 120 of the host computer 110, in some embodiments, includes any or all of a set of general purpose central processing units (CPUs), memory, and storage. The set of physical resources 150, in some embodiments, include any or all of a set of general purpose central processing units (CPUs), application-specific integrated circuits (ASICs), field-programmable gate arrays (FPGAs), memory, and storage. The configuration of the host computer 110 and smart NIC 140 depicted in **Figure 1** will be described in relation to **Figure 2**.

**Figure 2** conceptually illustrates a process 200 for installing programs enabling resource sharing on a host computer and smart NIC. The program for enabling resource sharing on the host computer, in some embodiments, is one of a hypervisor program, a virtual machine monitor, or other virtualization software. In some embodiments, the program for enabling resource sharing on the host computer executes as an operating system (OS) executing directly on the hardware of the host computer, while in other embodiments, the program executes as a software layer on top of an OS. Similarly, the program for enabling resource sharing on the smart NIC, in some embodiments, executes as an operating system (OS) executing directly on the hardware of the smart NIC, while in other embodiments, the program executes as a software layer on top of an OS.

The process 200, in some embodiments, is performed by a host computer (e.g., host computer 110) that in some embodiments, is a host computer (e.g., an x86 server) provided by a datacenter provider. The process 200 begins by receiving (at 210) a host-computer virtualization program (e.g., host-computer hypervisor program 115) that includes a smart NIC operating system (e.g., smart NIC operating system 145). The host-computer virtualization program (e.g., host-computer hypervisor program 115) and smart NIC operating system (e.g., smart NIC operating system 145), in some embodiments, are installer programs that install virtualization software (e.g., a software virtualization layer or a virtualization OS). The host-computer virtualization program, in some embodiments, is received from a network controller computer to configure the host computer to support virtualized compute nodes, storage, network cards, etc., to be implemented on the host computer for a virtual or logical network associated with the network controller computer.

Stage 101 of **Figure 1** illustrates a host computer 110 that has not yet been configured by virtualization software receiving a host-computer hypervisor program 115 that includes smart NIC operating system 145. In some embodiments, the two programs 115 and 145 are received separately (e.g., simultaneously as part of a package or sequentially). In other embodiments, the program received (at 210) is an update to one or both of the host-computer virtualization program and the smart NIC operating system. The update, in some embodiments, is processed as an update to the host-computer virtualization program even in the case that the update includes only updates to the smart NIC operating system.

After receiving (at 210) the host-computer virtualization program and the smart NIC operating system, the host computer then installs (at 220) the received host-computer virtualization program (e.g., host-computer hypervisor program 115) on the host computer. The virtualization program, in some embodiments, is a hypervisor such as ESXi^{™} provided by VMware, Inc. or other virtualization programs. As shown in stage 102 of **Figure 1**, the host computer 110 installs a host computer hypervisor 130 (dashed lines in **Figure 1** indicating software executing on a device) after receiving the host-computer hypervisor program 115. After installing the host-computer virtualization program 115, the host computer 110 is able to provide virtual resources (e.g., compute nodes, virtual switches, virtual storage, etc.) based on the physical resources 120 of the host computer 110.

After, or as part of, installing (at 220) the host-computer virtualization program, the host computer detects (at 230) that the smart NIC operating system is included in the host-computer virtualization program. In some embodiments, detecting (at 230) that the smart NIC operating system is incorporated in the host-computer virtualization program includes a set of operations to perform to program any virtualization-capable smart NICs connected to the host computer. The set of operations, in some embodiments, includes an operation to detect whether a virtualization-capable smart NIC is connected to the host computer.

The host computer determines (at 240) that a virtualization-capable smart NIC is connected to the host computer. In some embodiments, determining (at 240) that a virtualization-capable smart NIC is connected to the host computer is part of the installation process for the host-computer virtualization program. Determining (at 240) that a virtualization-capable smart NIC is connected to the host computer, in some embodiments, is based on a set of components exposed to the host computer by the smart NIC. In some embodiments, the host-computer virtualization program (e.g., an ESXi^{™} installer) queries a baseboard management controller (BMC) of the host computer to determine (at 240) that the smart NIC is compatible with the smart NIC operating system (e.g., a smart NIC operating system (OS) such as ESXio^{™}). In some embodiments, a virtualization-capable smart NIC is identified to the connected host computer during a previously-performed process that configures the connection between the host-computer virtualization program computer and the smart NIC.

After determining (at 240) that a virtualization-capable smart NIC is connected to the host computer, the host computer provides (at 250) the smart NIC operating system to the smart NIC for the smart NIC to install a virtualization layer to enable the smart NIC to share resources on the smart NIC. **Figure 1** illustrates, in stage 102, that the host computer 110 sends the smart NIC operating system 145 to smart NIC 140 for the smart NIC 140 to install a smart NIC operating system. In stage 103 of **Figure 1**, the smart NIC 140 installs smart NIC operating system 160 to enable virtualization of the physical resources 150 of the smart NIC 140.

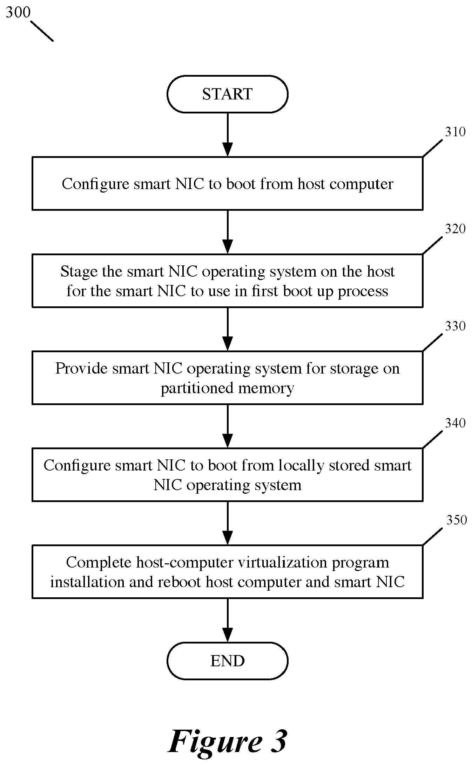

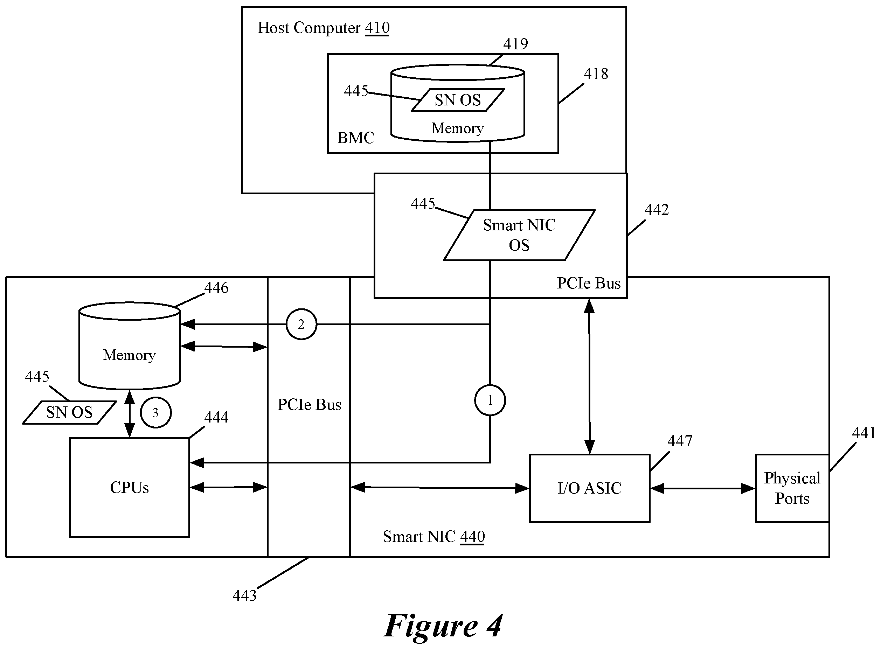

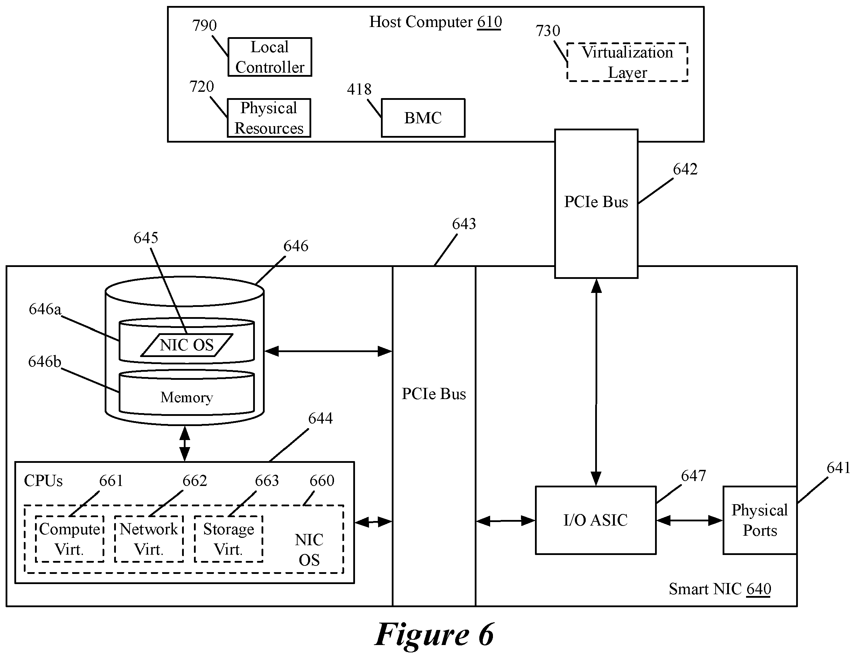

In some embodiments, providing (at 250) the smart NIC operating system for the smart NIC to install the smart NIC operating system includes multiple sub-operations. **Figure 3** conceptually illustrates a process 300 that, in some embodiments, represents the sub-operations that are included in operation 250. **Figure 3** is described, at least in part, in relation to **Figures 4** **and** **6**. Process 300 begins by configuring (at 310) the smart NIC to boot from an image stored on the host computer. In some embodiments, the host-computer virtualization program invokes BMC APIs to configure (at 310) the smart NIC to enable a unified extensible firmware interface (UEFI) SecureBoot on the smart NIC.

After configuring the smart NIC to enable booting from an image stored on the host computer, the smart NIC operating system is staged (at 320) on the host computer for the smart NIC to use in an initial boot-up process. The host-computer virtualization program, in some embodiments, invokes BMC APIs to stage (at 320) the smart NIC operating system (e.g., ESX.io) in BMC storage as an image file (e.g., as an ISO, DD, tgz, or zip file) for the smart NIC to perform the initial boot-up of the smart NIC operating system. **Figure 4** illustrates a simplified view of host computer 410, including BMC 418 connecting to smart NIC 440 through PCIe bus 442. **Figure 4** illustrates that the BMC 418 provides a smart NIC operating system 445 stored in BMC memory 419 to the CPU 444 of the smart NIC 440 for the CPU 444 to perform a first boot from the image stored in BMC storage 419 (operation "1").

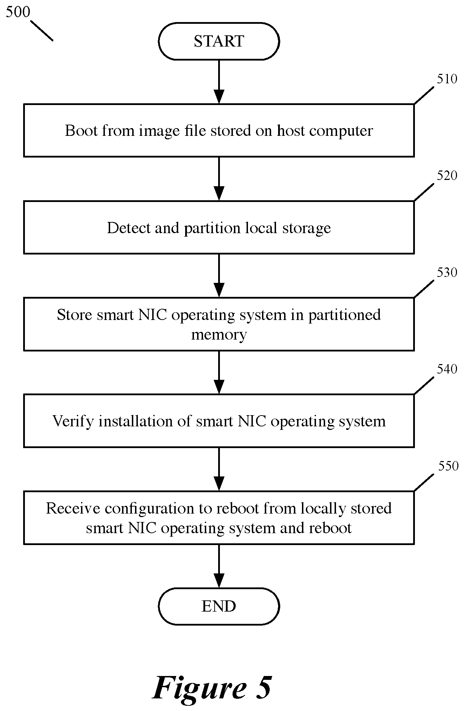

**Figure 5** conceptually illustrates a process 500 that is performed by the smart NIC to install the smart NIC operating system as part of process 300 of **Figure 3**. In some embodiments, the smart NIC, at this point, performs (at 510) a boot sequence for the smart NIC operating system from the BMC storage of the host computer. During the initialization, the local storage (e.g., embedded multi-media controller (eMMC), or other memory) is detected and partitioned (at 320). In some embodiments, the local storage is detected based on initialization scripts of the smart NIC operating system. The detected storage is then partitioned.

The smart NIC operating system (e.g., ESX.io bootloader and system modules) is then stored (at 530) in the local partitioned storage. In some embodiments, the smart NIC operating system is copied to the smart NIC local storage for storing (at 530) from the host computer based on a process of the smart NIC operating system. In other embodiments, the host-computer virtualization program detects that the smart NIC has booted from the image and partitioned the storage and provides the smart NIC operating system to the smart NIC for storage (at 530). **Figure 6** illustrates a smart NIC 640 after the installation is complete with its storage 646 partitioned into a first partition 646a storing the smart NIC operating system (NIC OS) 645 and a second partition 646b. **Figure 4** illustrates that after providing the smart NIC operating system 445 to the CPU 444 (in operation "1"), the smart NIC operating system is provided to the memory 446 (as operation "2").

The smart NIC operating system then verifies (at 540) that the installation was successful. In some embodiments, verifying (at 540) that the installation was successful includes verifying that the smart NIC device and functions are successfully enumerated. The verification (at 540), in some embodiments, is based on a set of post-installation scripts. In some embodiments, the verification includes a communication to the host-computer virtualization program installation process that the installation on the smart NIC was successful.

The host computer BMC then configures (at 340) the smart NIC to boot from the local copy of the smart NIC operating system. **Figure 4** illustrates that after the smart NIC operating system is stored in the memory 446, the CPU accesses the smart NIC operating system (SN OS 445) from the memory 446 (as operation "3").

The host computer then completes (at 350) the installation of the host-computer virtualization program and reboots the host computer and the smart NIC. These operations (340 and 350) are reflected in process 500 of **Figure 5** in operation 550, in which the smart NIC is configured to boot from the locally-stored smart NIC operating system and is rebooted. In some embodiments, the host computer is rebooted first to complete the installation of the host-computer virtualization program, and the host computer and smart NIC are then rebooted again to complete the installation of the smart NIC operating system. The host computer, in some embodiments, is rebooted first and then initiates a reboot of the smart NIC (from the smart NIC operating system stored in the memory of the smart NIC). In embodiments in which the smart NIC supports compute nodes of multiple tenants, an attempt to install the smart NIC operating system by another tenant's host-computer virtualization program installer is blocked. In some embodiments, the installation by a second tenant is unnecessary and would destroy any virtualization already performed for the first tenant. In such embodiments, the smart NIC or the host-computer virtualization program installer is programmed in such a way to determine if the smart NIC operating system is already installed. Additionally, the smart NIC or the host-computer hypervisor program installer, in some embodiments, is programmed to identify the tenant that installed the smart NIC operating system to allow updates to the smart NIC operating system made by that tenant.

As illustrated in **Figure 1**, the host-computer hypervisor program 115 and the smart NIC operating system 145, in some embodiments, are programs that do not have previous versions installed on the computer 110 or the smart NIC 140. In other embodiments, the host-computer hypervisor program 115 and the smart NIC operating system 145 received by the host computer 110 are update programs for previously-installed versions of the host-computer hypervisor program 115 and the smart NIC operating system 145. In yet other embodiments, after a host-computer hypervisor program 115 and the smart NIC operating system 145 are received, the host computer 110, in some embodiments, receives an additional program for updating the smart NIC operating system 145 and provides the received program to the smart NIC 140 for the smart NIC 140 to update the smart NIC operating system 145.

**Figure 6** illustrates a smart NIC 640 after a set of configuration processes similar or identical to those described above in relation to **Figures 2****,** **3****,** and **5**. After installing the smart NIC operating system 645, the CPUs 644 execute a NIC operating system 660 (e.g., a hypervisor, virtualization OS, or virtual machine monitor, etc.) that includes, in some embodiments, a compute virtualization module 661, a network virtualization module 662, and a storage virtualization module 663. In some embodiments, a smart NIC operating system 660 supports only a subset of these functions, supports additional functions, or supports a different combination of functions. The network virtualization module (or capability) 662, in some embodiments, is used to present the smart NIC 640 as multiple physical functions (PF) connected to a single host computer (e.g., a server) or a set of host computers. Each PF, in some embodiments, can be further virtualized as multiple virtual functions (VFs).

As used in this document, physical functions (PFs) and virtual functions (VFs) refer to ports exposed by a smart NIC using a PCIe interface to connect to a host computer (or set of host computers) over a PCIe bus. A PF refers to an interface of the smart NIC that is recognized as a unique resource with a separately configurable PCIe interface (e.g., separate from other PFs on a same smart NIC). The VF refers to a virtualized interface that is not fully-configurable as a separate PCIe resource, but instead inherits some configuration from the PF with which it is associated while presenting a simplified configuration space. VFs are provided, in some embodiments, to provide a passthrough mechanism that allows compute nodes executing on a host computer to receive data messages from the smart NIC without traversing a virtual switch of the host computer. The VFs, in some embodiments, are provided by virtualization software executing on the smart NIC. The VFs and PFs, in some embodiments, are deployed to support the storage and computer virtualization modules 661 and 663. For example, a PF or VF can be deployed to present a storage or compute resource provided by the smart NIC as a local device (i.e., a device connected to the host computer by a PCIe bus).

Smart NIC 640 also includes a local memory 646 and a set of general purpose CPUs 644 that are used to install (and support) the virtualization layer 730, which enables resource sharing of elements on the I/O portion and a compute portion of the smart NIC (e.g., the CPUs 644, memory 646, etc.). As shown, smart NIC operating system 645 is stored in memory 646 (and more specifically, in memory partition 646a) which communicates with the CPUs 644 to execute the smart NIC operating system 645 to install the NIC operating system 660 (e.g., ESX.io). In some embodiments, the memory 646 is an embedded multi-media controller (eMMC) memory that includes flash memory and a flash memory controller. The memory 646 and the CPUs 644 communicate, in some embodiments, with other elements of the smart NIC 640 over an internal PCIe bus 643.

Smart NIC 640 also includes an I/O ASIC 647 (among a set of additional ASICs or field-programmable gate arrays (FPGAs) not shown) that can be used to accelerate data message forwarding or other networking functions (encryption, security operations, storage operations, etc.). A set of physical ports 641 that provide connections to a physical network and interact with the I/O ASIC 647 is also included in smart NIC 640. The I/O ASIC and physical ports that are depicted in **Figure 4** perform a similar operations.

The host computer and smart NIC, in some embodiments, are elements of a datacenter that implements virtual networks for multiple tenants. In some embodiments, the virtual networks implemented in the datacenter include one or more logical networks including one or more logical forwarding elements, such as logical switches, routers, gateways, etc. In some embodiments, a logical forwarding element (LFE) is defined by configuring several physical forwarding elements (PFEs), some or all of which execute on host computers or smart NICs along with deployed compute nodes (e.g., VMs, Pods, containers, etc.). The PFEs, in some embodiments, are configured to implement two or more LFEs to connect two or more different subsets of deployed compute nodes. The virtual network in some embodiments, is a software-defined network (SDN) such as that deployed by NSX-T^{™} and includes a set of SDN managers and SDN controllers. In some embodiments, the set of SDN managers manage the network elements and instruct the set of SDN controllers to configure the network elements to implement a desired forwarding behavior for the SDN.

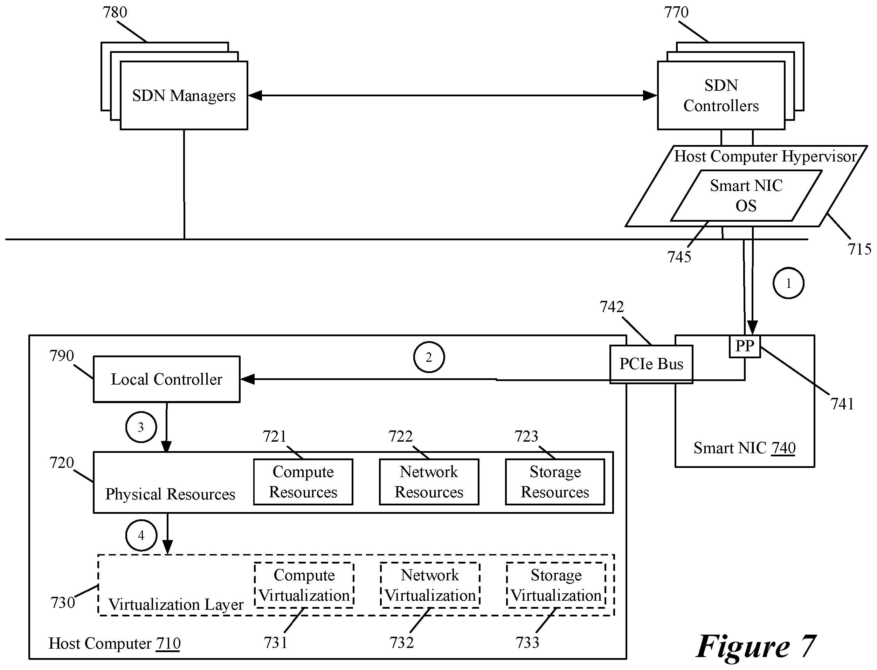

**Figure 7** illustrates a system 700 that includes the host computer 710, the smart NIC 740, a set of SDN controller computers 770, and a set of SDN manager computers 780. The set of SDN manager computers 780 implement a management plane for a particular SDN (e.g., a cloud provider SDN, or a tenant SND executed in the cloud or in a private datacenter). The set of SDN manager computers 780 receive input from a user to implement a certain SDN configuration including, in some embodiments, configuration for a set of LFEs, a set of compute nodes, and a set of storage resources. The set of SDN manager computers 780 communicate the desired configurations to the set of SDN controller computers 770 implementing a control plane for the SDN. The set of SDN controllers 770 generate configuration data for a set of host computers (including host computer 710) and provide control messages to a local controller 790 on the host computer 710 to configure a set of the network elements specified by a user. In some embodiments, the SDN manager computers 780 and SDN controller computers 770 are the NSX-T^{™} managers and controllers licensed by VMware, Inc.

As shown, the set of SDN controller computers 770 send a host-computer hypervisor program 715 to a local controller 790 of host computer 710 through smart NIC 740 (using physical port (PP) 741 and a PCIe bus 742). In some embodiments, the host-computer hypervisor program 715 is an installer program executed by the compute resources 721 of host computer 710 to install a virtualization layer (e.g., a hypervisor such as ESXi^{™} provided by VMware, Inc.) to enable the physical resources 720 of host computer 710 to be shared among multiple virtualized machines.

Local controller 790 receives the host-computer hypervisor program 715 and provides it to the physical resources 720 (e.g., runs the host-computer hypervisor program 715 using the compute resources 721 of the host computer 710). Based on the host-computer hypervisor program 715, a virtualization layer 730 is installed on the host computer 710 (shown using dashed lines to distinguish between hardware and software of the host computer 710). While virtualization layer 730 is shown as including a compute virtualization module 731, a network virtualization module 732, and a storage virtualization module 733, in some embodiments, a virtualization layer 730 supports only a subset of these functions, supports additional functions, or supports a different combination of functions. As described above in relation to **Figure 2**, as part of executing host-computer hypervisor program 715 to install the virtualization layer 730, the host computer 710 will provide smart NIC operating system 745 to smart NIC 740 for the smart NIC 740 to execute (e.g., install a smart NIC virtualization layer).

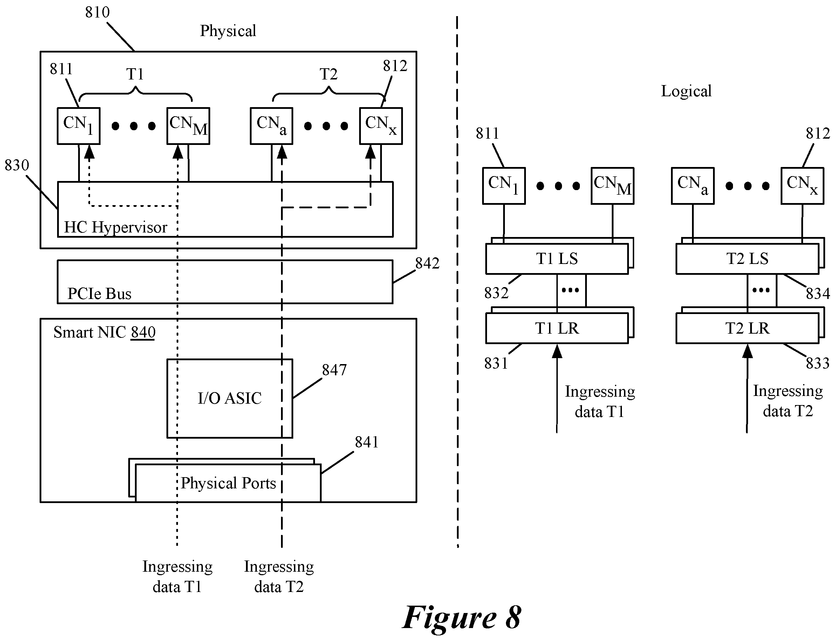

**Figure 8** illustrates a host computer 810 executing a host computer hypervisor 830 and a set of compute nodes (CN₁-CN_{M}) 811 for a first tenant ("T1") and a set of compute nodes (CNₐ-CNₓ) 812 for a second tenant ("T2"). **Figure 8** also illustrates a logical view of the separate logical networks defined for T1 and T2. As shown, the logical networks for the separate tenants include a set of logical routers and logical switches (831 and 832 for T1 and 833 and 834 for T2, respectively) that connect the compute nodes of the tenant. The different logical networks are both implemented by the host computer hypervisor 830 and, in some embodiments, the smart NIC 840. The host computer hypervisor 830, in some embodiments, includes a virtual switch (e.g., a software switch) that implements the LRs and LSs for the different tenants on the host computer 810. In some embodiments, the I/O ASIC 847 of the smart NIC 840 is configured by the host computer hypervisor 830 to perform logical routing and logical switching operations for the separate tenants. In other embodiments, the I/O ASIC 847 of the smart NIC 840 is configured by a hypervisor (not shown) of the smart NIC 840.

The I/O ASIC 847 of the smart NIC 840 and the host computer hypervisor 830, in some embodiments, implement separate processing pipelines for the separate tenants (e.g., the separate logical networks). Data messages, e.g., ingressing data messages T1 and T2, are segregated into the different processing pipelines of the different logical networks of the different tenants, in some embodiments, based on logical network identifiers (e.g., virtual local area network (VLAN) or virtual extensible LAN (VXLAN) identifiers).

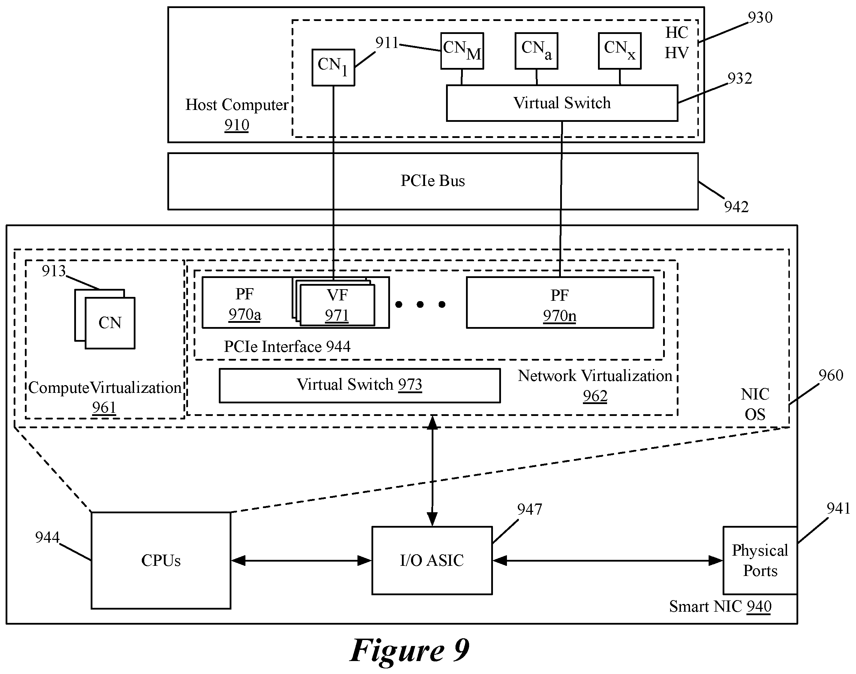

**Figure 9** illustrates a smart NIC 940 providing compute virtualization 961 and network virtualization 962 to provide virtualized resources (e.g., compute nodes 913, physical functions 970a-n, and a set of virtual functions 971) to be used by compute nodes 911 executing on a host computer 910 (depicted as executing within a host computer hypervisor 930). In some embodiments, compute nodes 913 are edge gateway machines that provide gateway services for compute nodes 911 executing on host computer 910.

Network virtualization 962 provides a virtualized PCIe interface 944 that presents the PCIe bus 942 as including a set of physical functions (PFs 970a-n) as defined above and, for a set of physical functions, a set of virtual functions 971. Both the host computer hypervisor 930 and NIC OS 960 execute a virtual switch 932 that provides logical routing and logical switching operations for compute nodes (virtual machines, container, Pods, etc.). In some embodiments, a virtual switch 973 on the smart NIC 940 provides logical forwarding operations for compute nodes on both the smart NIC 940 and on the host computer 910. In some embodiments, the virtual switch 973 interacts with the I/O ASIC 947 to perform data message processing offload (e.g., flow processing offload) on behalf of the host computer 910.

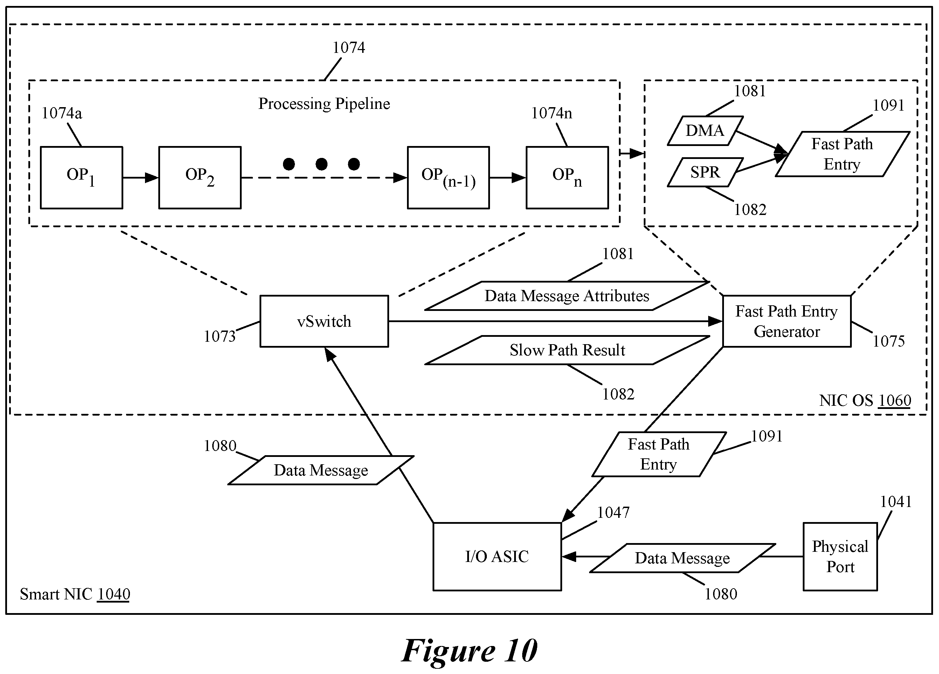

**Figure 10** illustrates an interaction between an I/O ASIC 1047, a virtual switch 1073, and a fast path entry generator 1075, in some embodiments. In some embodiments, I/O ASIC 1047 is configured to perform fast path processing for data messages to and from compute nodes executing on host computers connected to smart NIC 1040. In some embodiments, for first data messages in a data message flow (e.g., data message 1080), the I/O ASIC 1047is programmed to provide data message 1080 to a virtual switch 1073 executing in the NIC OS 1060. The virtual switch 1073 processes the data message 1080 through a processing pipeline 1074. Processing pipeline 1074 includes operations 1074a-n. The operations 1074a-n, in some embodiments, include a set of logical forwarding operations (logical switching, bridging, routing, etc.). In some embodiments, the operations 1074a-n also include a set of middlebox services (e.g., firewall, load balancing, deep packet inspection, etc.) enabled for a particular logical network (e.g., belonging to a particular logical tenant associated with the data message 1080). The processing pipeline 1074, in some embodiments, identifies a particular set of data message attributes 1081 used to identify a data message flow or set of data message flows to which the data message 1080 belongs and determines a particular set of actions (e.g., slow path result 1082) to take for future data messages matching the identified data message attributes 1081. The data message attributes 1081 and slow path results 1082 are then provided to fast path entry generator 1075 to be combined into a fast path entry 1091 to be programmed into I/O ASIC 1047 to process future data messages having attributes that match the identified data message attributes 1081.

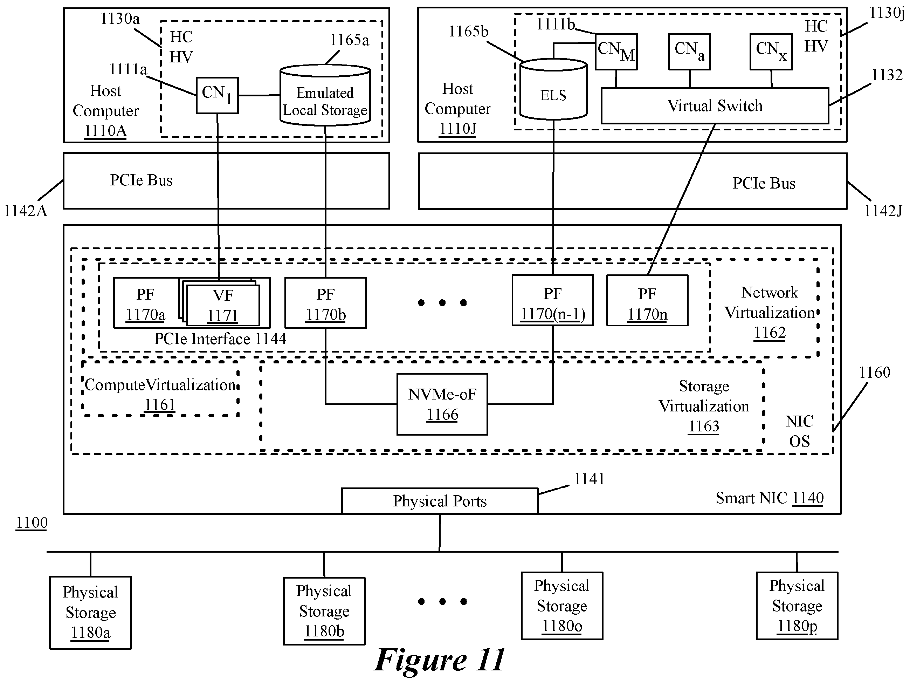

**Figure 11** illustrates a system 1100 including a smart NIC 1140 and a set of host computers 1110A-J connected to the smart NIC 1140 through two different PCIe buses 1142A and 1142J. Each PCIe bus 1142 is used to present virtualized elements of the smart NIC 1140 as different devices connected to the host computers 1110A-J. For example, PF 1170a and 1170n present as a NIC, while PF 1170b and 1170(n-1) present as connected storage devices. PF 1170a, as shown, presents a set of VFs as passthrough ports bypassing a virtual switch (not shown) of host computer 1110A. PF 1170b and 1170(n-1) appear to the host computers 1110A and 1110J as (emulated) local storages 1165a and 1165b connected by a PCIe bus 1142. The emulated local storages 1165 may appear as a local storage, a virtual storage area network, or virtual volume. In some embodiments, the storage virtualization 1163 backs the emulated local storage 1165 with a virtualized storage using non-volatile memory express (NMVe) or NVMe over fabrics (NVME-oF) 1166. The virtualized storage, in some embodiments, communicates with an external storage that is located on multiple physical storage devices 1180a-p. The communication, in some embodiments, uses NVMe-oF based on remote direct memory access (RDMA) or transport control protocol (TCP).

Many of the above-described features and applications are implemented as software processes that are specified as a set of instructions recorded on a computer-readable storage medium (also referred to as computer-readable medium). When these instructions are executed by one or more processing unit(s) (e.g., one or more processors, cores of processors, or other processing units), they cause the processing unit(s) to perform the actions indicated in the instructions. Examples of computer-readable media include, but are not limited to, CD-ROMs, flash drives, RAM chips, hard drives, EPROMs, etc. The computer-readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some embodiments, multiple software inventions can be implemented as sub-parts of a larger program while remaining distinct software inventions. In some embodiments, multiple software inventions can also be implemented as separate programs. Finally, any combination of separate programs that together implement a software invention described here is within the scope of the invention. In some embodiments, the software programs, when installed to operate on one or more electronic systems, define one or more specific machine implementations that execute and perform the operations of the software programs.

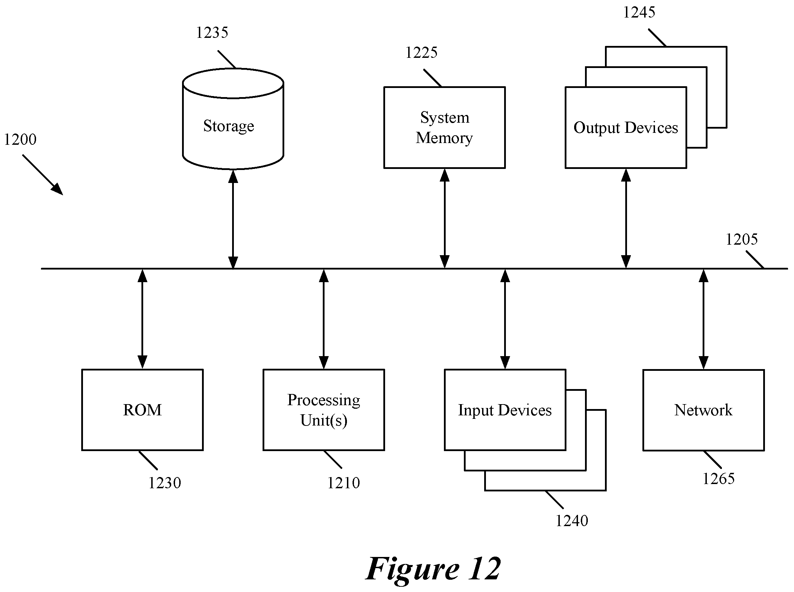

**Figure 12** conceptually illustrates an electronic system 1200 with which some embodiments of the invention are implemented. The electronic system 1200 may be a computer (e.g., a desktop computer, personal computer, tablet computer, server computer, mainframe, a blade computer etc.), phone, PDA, or any other sort of electronic device. Such an electronic system includes various types of computer-readable media and interfaces for various other types of computer-readable media. Electronic system 1200 includes a bus 1205, processing unit(s) 1210, a system memory 1225, a read-only memory 1230, a permanent storage device 1235, input devices 1240, and output devices 1245.

The bus 1205 collectively represents all system, peripheral, and chipset buses that communicatively connect the numerous internal devices of the electronic system 1200. For instance, the bus 1205 communicatively connects the processing unit(s) 1210 with the read-only memory 1230, the system memory 1225, and the permanent storage device 1235.

From these various memory units, the processing unit(s) 1210 retrieve instructions to execute and data to process in order to execute the processes of the invention. The processing unit(s) may be a single processor or a multi-core processor in different embodiments.

The read-only-memory (ROM) 1230 stores static data and instructions that are needed by the processing unit(s) 1210 and other modules of the electronic system. The permanent storage device 1235, on the other hand, is a read-and-write memory device. This device 1235 is a non-volatile memory unit that stores instructions and data even when the electronic system 1200 is off. Some embodiments of the invention use a mass-storage device (such as a magnetic or optical disk and its corresponding disk drive) as the permanent storage device 1235.

Other embodiments use a removable storage device (such as a floppy disk, flash drive, etc.) as the permanent storage device 1235. Like the permanent storage device 1235, the system memory 1225 is a read-and-write memory device. However, unlike storage device 1235, the system memory 1225 is a volatile read-and-write memory, such as random-access memory. The system memory 1225 stores some of the instructions and data that the processor needs at runtime. In some embodiments, the invention's processes are stored in the system memory 1225, the permanent storage device 1235, and/or the read-only memory 1230. From these various memory units, the processing unit(s) 1210 retrieve instructions to execute and data to process in order to execute the processes of some embodiments.

The bus 1205 also connects to the input and output devices 1240 and 1245. The input devices 1240 enable the user to communicate information and select commands to the electronic system 1200. The input devices 1240 include alphanumeric keyboards and pointing devices (also called "cursor control devices"). The output devices 1245 display images generated by the electronic system 1200. The output devices 1245 include printers and display devices, such as cathode ray tubes (CRT) or liquid crystal displays (LCD). Some embodiments include devices such as a touchscreen that function as both input and output devices.

Finally, as shown in **Figure 12**, bus 1205 also couples electronic system 1200 to a network 1265 through a network adapter (not shown). In this manner, the computer can be a part of a network of computers (such as a local area network ("LAN"), a wide area network ("WAN"), or an Intranet, or a network of networks, such as the Internet. Any or all components of electronic system 1200 may be used in conjunction with the invention.

Some embodiments include electronic components, such as microprocessors, storage, and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra-density optical discs, any other optical or magnetic media, and floppy disks. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some embodiments are performed by one or more integrated circuits, such as application-specific integrated circuits (ASICs) or field-programmable gate arrays (FPGAs). In some embodiments, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms display or displaying means displaying on an electronic device. As used in this specification, the terms "computer-readable medium," "computer-readable media," and "machine-readable medium" are entirely restricted to tangible, physical objects that store information in a form that is readable by a computer. These terms exclude any wireless signals, wired download signals, and any other ephemeral signals.

This specification refers throughout to computational and network environments that include virtual machines (VMs). However, virtual machines are merely one example of data compute nodes (DCNs) or data compute end nodes, also referred to as addressable nodes. DCNs may include non-virtualized physical hosts, virtual machines, and containers that run on top of a host operating system without the need for a hypervisor or separate operating system and hypervisor kernel network interface modules.

VMs, in some embodiments, operate with their own guest operating systems on a host using resources of the host virtualized by virtualization software (e.g., a hypervisor, virtual machine monitor, etc.). The tenant (i.e., the owner of the VM) can choose which applications to operate on top of the guest operating system. Some containers, on the other hand, are constructs that run on top of a host operating system without the need for a hypervisor or separate guest operating system. In some embodiments, the host operating system uses name spaces to isolate the containers from each other and therefore provides operating-system level segregation of the different groups of applications that operate within different containers. This segregation is akin to the VM segregation that is offered in hypervisor-virtualized environments that virtualize system hardware, and thus can be viewed as a form of virtualization that isolates different groups of applications that operate in different containers. Such containers are more lightweight than VMs.

Hypervisor kernel network interface modules, in some embodiments, are non-VM DCNs that include a network stack with a hypervisor kernel network interface and receive/transmit threads. One example of a hypervisor kernel network interface module is the vmknic module that is part of the ESXi^{™} hypervisor of VMware, Inc.

It should be understood that while the specification refers to VMs, the examples given could be any type of DCNs, including physical hosts, VMs, non-VM containers, and hypervisor kernel network interface modules. In fact, the example networks could include combinations of different types of DCNs in some embodiments.

While the invention has been described with reference to numerous specific details, one of ordinary skill in the art will recognize that the invention can be embodied in other specific forms without departing from the spirit of the invention. In addition, a number of the figures (including **Figures 2****,** **3****,** and **5**) conceptually illustrate processes. The specific operations of these processes may not be performed in the exact order shown and described. The specific operations may not be performed in one continuous series of operations, and different specific operations may be performed in different embodiments. Furthermore, the process could be implemented using several sub-processes, or as part of a larger macro process. Thus, one of ordinary skill in the art would understand that the invention is not to be limited by the foregoing illustrative details, but rather is to be defined by the appended claims.
The following embodiments of the present invention (numbered for backreferencing) are also included in the application:
Embodiment 1: A method of provisioning a first program for enabling resource sharing on a smart network interface card (NIC ) of a host computer, the method comprising:
   at the host computer:
   receiving the first program at the host computer along with a second program for sharing resources of the host computer;
   installing the second program on the host computer; and
   providing the first program to the smart NIC for the smart NIC to install on the smart NIC.
Embodiment 2: The method of embodiment 1, wherein the first program is part of one download package with the second program.
Embodiment 3: The method of embodiment 1, wherein the first and second programs are programs that do not have earlier versions currently running on the smart NIC and the host computer.
Embodiment 4: The method of embodiment 3 further comprising, at the host computer:
   receiving an update third program for updating the first program; and
   providing the third program to the smart NIC to update the first program.
Embodiment 5: The method of embodiment 1, wherein the first and second programs are update programs that are subsequent versions of earlier program versions currently running on the smart NIC and the host computer.
Embodiment 6: The method of embodiment 1 further comprising, before providing the first program to the smart NIC and after receiving the first and second programs, detecting that the host computer has the smart NIC.
Embodiment 7: The method of embodiment 1 further comprising directing the smart NIC to install the first program.
Embodiment 8: The method of embodiment 1, wherein receiving the first and second programs comprises receiving the first and second programs at a compute agent executing on the host computer to install an operating system for sharing resources of the host computer among various machines that will execute on the host computer.
Embodiment 9: The method of embodiment 8, wherein the second program is the operating system.
Embodiment 10: The method of embodiment 9, wherein the operating system is a hypervisor.
Embodiment 11: The method of embodiment 1, wherein the smart NIC comprises an application-specific integrated circuit (ASIC), a general purpose central processing unit (CPU) and a memory, the first program for storing in the memory and executing by the CPU, the ASIC for processing packets forwarded to and from the host computer.
Embodiment 12: The method of embodiment 1, wherein the first program is an operating system for sharing resources of the smart NIC among various machines that execute on the host computer.
Embodiment 13: The method of embodiment 1, wherein the first program is an operating system for sharing resources of the smart NIC among various tenants of a multi-tenant datacenter.
Embodiment 14: The method of embodiment 1, wherein the first program is a computer operating system over which one or more machines execute on the smart NIC.
Embodiment 15: The method of embodiment 1, wherein the first program is a network operating system for providing network virtualization services on the smart NIC.
Embodiment 16: The method of embodiment 15, wherein the network virtualization services comprise segregating packets into different private networks that are defined over a datacenter's shared network, and forwarding the packets for the private networks.
Embodiment 17: The method of embodiment 15, wherein the network virtualization services comprise at least one of network switching operations and network routing operations.
Embodiment 18: The method of embodiment 15, wherein the network virtualization services comprise middlebox services.
Embodiment 19: The method of embodiment 1, wherein the first program comprises a storage operating system for providing storage virtualization service on the smart NIC.
Embodiment 20: The method of embodiment 19, wherein the storage virtualization service emulates a local storage for the host computer from a distributed set of storages executing on a plurality of host computers.
Embodiment 21: A machine readable medium storing a program which when implemented by at least one processing unit implements the method according to any one of embodiments 1-20.
Embodiment 22: An electronic device comprising:
   a set of processing units; and
   a machine readable medium storing a program which when implemented by at least one of the processing units implements the method according to any one of embodiments 1-20.
Embodiment 23: A system comprising means for implementing the method according to any one of embodiments 1-20.
Embodiment 24: A computer program product comprising instructions which when executed by a computer cause the computer to perform the method according to any one of embodiments 1-20.

## Claims

1. A method of provisioning a first program (145) for enabling resource sharing on a smart network interface card 'NIC' (140) of a host computer (110), the method comprising:
at the host computer (110):
receiving, at the host computer (110), a download package comprising the first program (145) and a second program (115) for sharing resources of the host computer (110), wherein the first program (145) is a smart NIC operating system;
installing the second program (115) on the host computer (110);
determining (240), by the host computer, that a virtualization-capable smart NIC is connected to the host computer;
detecting (230), at the host computer, that the smart NIC operating system is included in the download package;
determining (240), at the host computer, that the smart NIC is compatible with the smart NIC operating system; and
providing the first program (145) to the smart NIC (140) for the smart NIC (140) to install on the smart NIC (140).

2. The method of claim 1, wherein the first and second programs (145, 115) are programs that do not have earlier versions currently running on the smart NIC (140) and the host computer (110).

3. The method of claim 2 further comprising, at the host computer (110):
receiving an update third program for updating the first program (145); and
providing the third program to the smart NIC (140) to update the first program (145).

4. The method of claim 1, wherein the first and second programs (145, 115) are update programs that are subsequent versions of earlier program versions currently running on the smart NIC (140) and the host computer (110).

5. The method of claim 1 further comprising, before providing the first program (145) to the smart NIC (140) and after receiving the first and second programs (145, 115), detecting that the host computer (110) has the smart NIC (140).

6. The method of claim 1 further comprising directing the smart NIC (140) to install the first program (145).

7. The method of claim 1, wherein receiving the first and second programs (145, 115) comprises receiving the first and second programs (145, 115) at a compute agent executing on the host computer (110) to install an operating system for sharing resources of the host computer (140) among various machines that will execute on the host computer (140).

8. The method of claim 7, wherein the second program (115) is the operating system and the operating system is a hypervisor (130).

9. The method of claim 1, wherein the smart NIC (140) comprises an application-specific integrated circuit (ASIC) (447), a general purpose central processing unit (CPU) (444) and a memory (446), the first program (145) for storing in the memory (446) and executing by the CPU (444), the ASIC (447) for processing packets forwarded to and from the host computer (110).

10. The method of claim 1, wherein the first program (145) provides for one of:
1) an operating system (160) for sharing resources of the smart NIC (140) among various machines that execute on the host computer (110),
2) an operating system (160) for sharing resources of the smart NIC (140) among various tenants of a multi-tenant datacenter,
3) a computer operating system (160) over which one or more machines execute on the smart NIC (140), or
4) a network operating system (160) for providing network virtualization services on the smart NIC (140).

11. The method of claim 9, wherein the network virtualization services comprise one of (1) segregating packets into different private networks that are defined over a datacenter's shared network and forwarding the packets for the private networks, (2) at least one of network switching operations and network routing operations, or (3) middlebox services.

12. The method of claim 1, wherein the first program (145) comprises a storage operating system (160) for providing storage virtualization service on the smart NIC (140), the storage virtualization service emulating a local storage for the host computer (110) from a distributed set of storages (1180) executing on a plurality of host computers.

13. A machine readable medium storing a program which when implemented by at least one processing unit implements the method according to any one of claims 1-12.

14. A system comprising means for implementing the method according to any one of claims 1-12.
